# EUROPEAN PATENT SPECIFICATION

(11) **EP 1 307 069 B1**
(45) Date of publication and mention of the grant of the patent: **27.02.2019**
(21) Application number: 02292569.7
(22) Date of filing: 17.10.2002
(51) Int. Cl.: H04R 1/02, H04R 5/02, H04R 31/00, H04N 5/64

(54) **Casing for an electronic device and process of assembly of such a casing**
Gehäuse für eine elektronische Vorrichtung und Verfahren zur Montage eines solchen Gehäuses
Boîtier pour un dispositif électronique et procédé d'assemblage d'un tel boîtier

(30) Priority: 23.10.2001 EP 01125111
(43) Date of publication of application: 02.05.2003
(73) Proprietor: InterDigital Madison Patent Holdings, 75017 Paris (FR)
(72) Inventor: Sperle, Cornelius, 49100 Angers (FR); Evenisse, Michel, 49140 Fontaine-Milon (FR); Frementau, Patrice, 49140 Villeveque (FR)
(74) Representative: Le Dantec, Claude

(56) References cited:
- DE-A1- 19 963 976
- JP-A- H0 965 251
- US-A- 5 139 319
- US-A- 5 604 337
- US-A- 5 608 809
- PATENT ABSTRACTS OF JAPAN vol. 009, no. 173 (E-329), 18 July 1985 (1985-07-18) & JP 60 043995 A (MATSUSHITA DENKI SANGYO KK), 8 March 1985 (1985-03-08)
- PATENT ABSTRACTS OF JAPAN vol. 1996, no. 09, 30 September 1996 (1996-09-30) & JP 08 116582 A (SONY CORP), 7 May 1996 (1996-05-07)
- PATENT ABSTRACTS OF JAPAN vol. 017, no. 575 (E-1449), 20 October 1993 (1993-10-20) & JP 05 167951 A (MATSUSHITA ELECTRIC IND CO LTD), 2 July 1993 (1993-07-02)

## Description

The present invention relates to a casing for an electronic device that uses a loudspeaker, such as a display, a TV set, a radio etc. The invention also relates to a process of assembly of such a casing.

When assembling such an electronic device, mounting a loudspeaker enclosure or loudspeakers is more problematic than the mounting of most other components, because the way the enclosure or loudspeaker is mounted has a critical influence on the quality of sound generated by the device. This quality is seriously impaired if the mounting of the enclosure or loudspeaker is not firm enough to prevent the frame of the enclosure or loudspeaker from trembling with respect to the support on which it is mounted, or if the support can be excited to vibrate by the sound produced by the loudspeaker. Conventionally, therefore, loudspeakers have been mounted by screwing to a support. Furthermore, in a display having for instance a cathode ray tube, vibrations can generate disturbances on the displayed images if the enclosure or loudspeaker is not properly attached.

A TV set in which a loudspeaker is mounted without the use of screws is known from JP 600 43 995 A. According to this document, a loudspeaker can be mounted on a cabinet of a TV by engaging one side of the frame of the loudspeaker behind a pawl provided at an inner surface of a baffle board. A second pawl is connected to an edge of the baffle board by a film hinge. By folding the film hinge, this second pawl can be brought into engagement with the other side of the frame of the loudspeaker, and the pawl is held in position by mounting a rear cover to the cabinet.

With the cabinet design of this document, mounting a loudspeaker is already easier and faster than by the traditional method of screwing. However, mounting the rear cover behind the baffle board may be difficult. Namely, when the film hinge has been bent in order to engage the loudspeaker, care must be taken to prevent it from unbending again, because otherwise, the loudspeaker becomes loose again, and the rear cover cannot be mounted. A further problem is that the baffle board and the loudspeaker frame must be manufactured within narrow tolerance ranges. Namely, if the pawls are too close to each other, it may be impossible to fold the film hinge as far as necessary in order to enable the rear cover to be mounted, and if they are too far apart, the hold of the loudspeaker by the pawls may not be firm enough, so that the loudspeaker may rattle in operation.

JPH 0965251 discloses a loudspeaker mounted between the two shells of a television casing. The loudspeaker is fixed to the front casing by means of mating ribs and screws. After assembly of the two shells, the loudspeaker is further pressed by fixing ribs on the rear shell, thereby preventing vibration of the speaker housing.

It is the object of the present invention to provide a casing for an electronic device using a loudspeaker unit which is very easy to assemble.

This object is achieved by a casing for an electronic device according to claim 1 of the present invention.

Here, by holding the loudspeaker unit between the first and second casing members, the second pawl of JP 600 43 994 A can be dispensed with, and the problem of keeping the hinge from unbending during the assembly of the casing vanishes.

The loudspeaker unit and the first casing member have a single pair of mating male and female first connecting members extending in a trajectory along which the two casing members are moved with respect to one another during assembly. Thus, the first connecting members automatically engage when the first casing member is brought into its fixing position, and assembling the first and second casing members is just as easy as if the loudspeaker unit were not there at all. The loudspeaker unit and the second casing member have two pairs of mating male and female second connecting members for mounting the loudspeaker unit to the second casing member. The two pairs of second connecting members give the loudspeaker unit a reasonably firm hold on the second casing member before the two casing members are assembled, so that when moving the first casing member towards the second into the fixing position, the one pair of first connecting members is easy to engage.

Considering the quality of sound, it is desirable that when the first connecting members are in the fixing position, there should be a space between them in which a first vibration absorbing member is located, in order to avoid transmission of vibrations from the loudspeaker unit to the casing.

If these second connecting members extend along the same trajectory as the first connecting members, the loudspeaker unit can be easily mounted to the second casing member by a movement with respect to the second casing member similar to the movement of the first casing member with respect to the second, and after the first casing member has been mounted, the loudspeaker unit will be firmly held between the two casing members.

Just like in the case of the first connecting members, there should be a space between the second male and female connecting members in said fixing position, and a second vibration absorbing member should be located in this space.

As a further means for facilitating assembly, resilient locking means can be provided which lock together the loudspeaker and the second casing member, so that there is no risk of these two elements coming apart while the first casing member is brought into the fixing position.

The invention also proposes a process for assembling a loudspeaker unit and a casing comprising a first casing member and a second casing member, comprising the step of moving the loudspeaker unit towards the second casing member thereby engaging two pairs of male-female second connecting members realising electrical connections between the loudspeaker unit and electronic circuitry carried by the second casing ; moving the first casing member towards the loudspeaker unit, thereby engaging a single pair of male-female first connecting members and thereby fixing the loudspeaker unit between the first and the second casing member. Further details and advantages of the invention will become apparent from the subsequent description of preferred embodiments given with reference to the drawings. In the drawings:
- Fig. 1: is a schematic sectional drawing of a TV set according to the present invention;
- Fig. 2: is a perspective view of a loudspeaker unit of the TV set of Fig. 1;
- Fig. 3: is a perspective view of the TV set of Fig. 1 at an intermediate stage of the mounting procedure;
- Fig. 4: is a drawn-apart view of a loudspeaker unit and parts of first and second casing elements according to a modified embodiment; and
- Fig. 5: is a drawn-apart perspective view of a loudspeaker unit and first and second casing members according to an example not forming part of the invention.

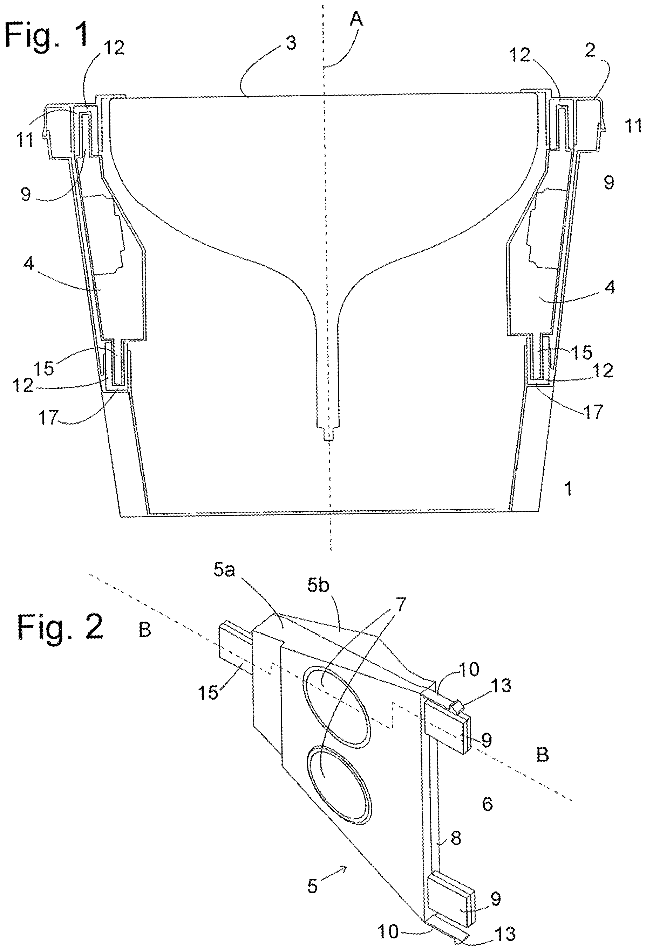

Fig. 1 is a simplified horizontal section of a TV set according to the present invention, taken along dash-dot-line B of Fig. 2. The casing of the TV set is mainly formed of two members, a first casing member 1 forming the rear part of the casing and a second or front casing member 2 forming a frame which surrounds a visible front surface of a cathode ray tube (CRT)3.

The casing members 1, 2 are each moulded in one part from a plastics material.

The two casing members 1, 2 are designed to be assembled by moving them towards each other along an axis A of the cathode ray tube 3, into a fixing position as shown in Fig.1, in which they are in contact with each other and are fixed one to the other e.g. by screws or by elastic latch elements (not shown) which are formed on one of the casing members 1 or 2 and engage openings of the other casing member 2 or 1, respectively.

The TV set has two loudspeaker units 4, here subwoofer loudspeaker enclosures, at the left hand and right hand sides of the CRT 3. Each of these loudspeaker units has a hollow shell 5, composed of shell halves 5a, 5b moulded from plastics material, which is shown in perspective in Fig. 2.

A side wall 6 of the shell has openings 7 for mounting individual loudspeakers (not shown) therein. Fig. 2 shows two such openings 7, but obviously, these openings 7 can be provided in any desirable number. A lateral surface 8, which after assembly faces the second casing member 2 is provided with two projections forming rigid male connecting elements 9 and two elastic latches 10. The elastic latches 10 realise pre-mounting means.

The second casing member 2 has female connecting members 11 designed for receiving the male connecting members 9. The receiving cavity of these female connecting members 11 is larger than the male connecting members 9, and the space between the two is filled with a vibration dampening material 12. There is no direct contact between the second casing member 2 and the loudspeaker units 4, so that vibrations of the shell 5 which may be excited by the operation of the loudspeakers cannot be transmitted to the second casing member 2 without being dampened by the dampening material 12. This greatly limits transmission of vibrations to the cathode ray tube.

The dampening material 12, e.g. a foamed plastics material, is performed in the shape of a cap, which can be stuck on the male connecting member 9 before engagement, so that the male connecting member 9, with the cap on it, can be pushed into a female connecting member 11 of the second casing member 2.

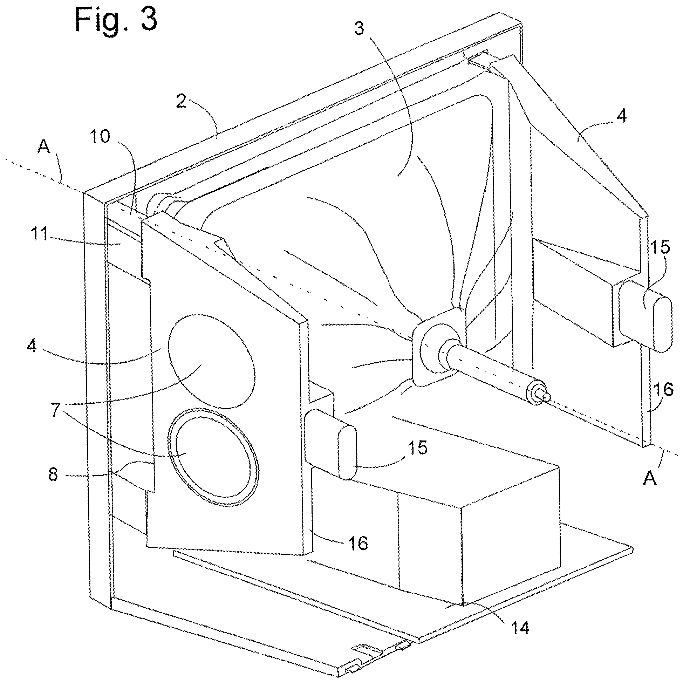

The second casing member 2 further has two openings (not shown) which are located so as to receive the tips of the latches 10 when the male connecting members 9 are introduced into the female connecting members 11. When the male members 9 are fully introduced, locking projections 13 of the latches 10 will engage with an edge of the opening, so that the second casing member 2 and the loudspeaker unit 4 cannot inadvertently come apart again. This intermediate stage of the mounting procedure is shown in Fig. 3 ,where the loudspeaker units are pre-mounted, or temporarily mounted, on the second casing member.

Since electronic circuitry 14 of the TV set is also mounted on the second casing member 2, electrical connections between the loudspeaker units 4 and the circuitry 14 can easily be installed at this stage.

As can clearly be seen from Fig. 3, a further male connecting member 15 is provided at a side 16 of the loudspeaker unit 4 which is opposite to lateral side 8. Just like the male connecting members 9, this connecting member 15 extends along an axis parallel to axis A of the CRT 3.

In the last stage of the mounting procedure, rear casing member 1 is moved with respect to the second casing member 2, the CRT3 and the loudspeaker units 4 along axis A of the CRT 3 and is brought into contact with the second casing member 2. During this movement, male connecting members 15 are introduced into corresponding female connecting members 17 (see Fig. 1) of first casing member 1. The shape of male and female connecting members 15, 17 is the same as that of members 9, 13, so that here, too, a body of dampening material 12 can be fitted between the two types of connecting members 15, 17. In this way, when the first and second casing members 1, 2 are assembled, the loudspeaker units 4 are firmly held between the two at three points each, and at each of these points, there is a body of dampening material 12 between the loudspeaker unit 4 and any of the casing members 1, 2 which prevents unwanted vibration from being transmitted from the loudspeaker unit 4 to the casing members 1, 2.

Each loudspeaker unit 4 is thus mounted to the casing by mere relative movement between the loudspeaker unit 4, the second casing member 2 and the first casing member 1.

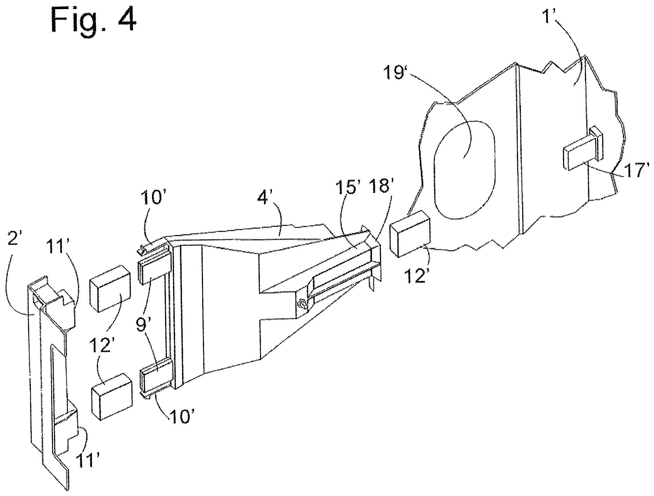

Fig. 4 is a drawn-apart perspective view of a modified embodiment of the present invention. Elements of this embodiment that are homologous to elements of the embodiment of Figs. 1 to 3 have the same reference numerals and will be not described in detail again. For distinction, the reference numerals of this second embodiment have a prime (').

Fig. 4 shows parts of first and second casing members 1', 2' designed to co-operate with loudspeaker unit 4'. This embodiment differs from that of Figs. 1 to 3 in that the loudspeaker unit 4' has no male but a female connecting member 15', which is designed to co-operate with a male connecting member 17' provided at the first casing member 1'. The male connecting member 17' can be integrally moulded with the first casing member 1' or a different part attached to the first casing member 1'.

The female connecting member 15' has a funnel-shaped opening portion 18'. This type of opening portion is useful in facilitating the introduction of the male connecting member 17' with the cap of dampening material 12' placed upon it, because when the first casing member 1' is being mounted, it conceals both connecting members 15', 17' from the view of an operator, so that the male connecting member 17' has to find its way "blindly" into the female one 15'. Reference numeral 19' designates a grid in a side wall of rear casing member 1' which, when assembled, aligns with the locations of the loudspeakers of loudspeaker unit 4'.

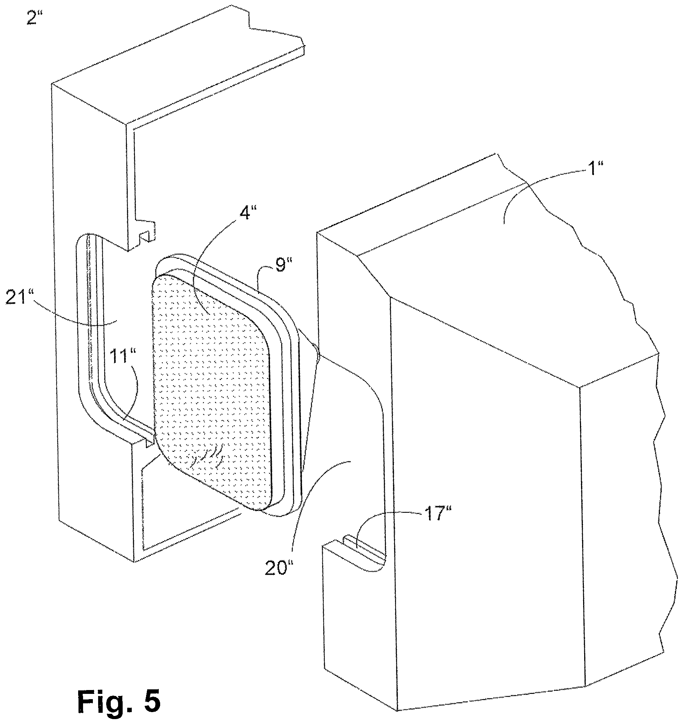

Fig. 5 shows an example not forming part of the invention. Again, elements that correspond in function to elements of the first and second embodiments have the same reference numerals and are distinguished by two primes ("). Here, male and female connecting members are formed by a ridge 9" at the circumference of loudspeaker unit 4", and female connecting members are grooves 11", 17" at the edges of cut-outs 20", 21" of first and second casing members 1", 2", respectively.

Although not shown for this specific example, latches analogous to the latches 10 of Fig. 2 might be provided at the loudspeaker unit 4" of this example, too, in order to temporarily lock the loudspeaker unit 4" to the second casing member 2", so that there is no risk of these elements 2", 4" coming apart when the first casing member 1" is brought into its fixing position.

The loudspeaker unit 4" does not necessarily have a shell in which the loudspeaker itself is mounted. Instead, the circumferential ridge 9" might be the outer edge of a membrane-holding frame of the loudspeaker. Analogously, the embodiments of Figs. 1 to 4 might be modified by not providing the shell 5 and placing the connecting member 9, 15 or 9', 15' directly on a membrane-holding frame.

It can be noted that, for each casing member, the connecting member(s) extend(s) along the direction of moulding of the casing member which simplifies the design for injection moulding. This direction is also the direction of assembly of the first and second casing member, and hence the direction of assembly of the loudspeaker unit.

Though the described embodiment comprises a cathode ray tube, the invention is not limited to this kind of display. For instance, the display can be a retro-projection system.

Furthermore, the invention is not limited to use in a display but also applies to other types of casing for an electronic device.

## Claims

1. A casing for an electronic device comprising a first casing member (1, 1', 1"), a second casing member (2, 2', 2"), a loudspeaker unit (4, 4', 4") comprising at least a loudspeaker and adapted to be mounted on the second casing member (2, 2', 2"), the two casing members (1, 1', 1", 2, 2', 2") being designed to be assembled by moving the first casing member (1, 1', 1") towards the second casing member (2, 2', 2") along a given trajectory (A) into a fixing position and fixing it to the second casing member (2, 2', 2"), the loudspeaker unit (4, 4', 4") being held between the first and second casing members (1, 1', 1", 2, 2', 2"), **characterized in that**
- the loudspeaker unit (4, 4') and the first casing member (1, 1') have a single pair of mating male and female first connecting members (15, 15', 17, 17') extending along said trajectory (A) so as to engage when the first casing member (1, 1') is brought into said fixing position,
- the loudspeaker unit (4, 4') and the second casing member (2, 2') have two pairs of mating male and female second connecting members (9, 9', 11, 11') for mounting the loudspeaker unit (4, 4') to said second casing member (2, 2').

2. A casing according to claim 1, wherein a space exists between said first male and female connecting members (15, 15'; 17, 17') when in said fixing position, and wherein a first vibration absorbing member (12) is located in said space.

3. A casing according to claim 1 or 2, with a first female connecting member (15') having a funnel type receiving section (18').

4. A casing according to claim 1, wherein said second connecting members (9, 9'; 11, 11') extend along said trajectory (A).

5. A casing according to claim 1 or 4, wherein a space exists between said second male and female connecting members (9, 9'; 11, 11') when in said fixing position, and wherein a second vibration absorbing member (12, 12') is located in said space.

6. A casing according to any of claims 1 to 5, wherein the electronic device is a CRT device, in particular a TV set, wherein the second casing member (2, 2') is a casing front member forming a frame for a CRT (3), wherein the first casing member (1, 1') is a casing rear member, and wherein the loudspeaker unit (4, 4') is located at a lateral side of the casing.

7. Process for assembling a loudspeaker unit (4, 4') and a casing comprising a first casing member (1, 1') and a second casing member (2, 2'), comprising the steps of:
- moving the loudspeaker unit (4, 4') towards the second casing member (2, 2') thereby engaging two pairs of male-female second connecting members (9, 9', 11, 11');
- moving the first casing member (1, 1') towards the loudspeaker unit (4, 4'), thereby engaging a single pair of male-female first connecting members (15, 15', 17, 17') and thereby fixing the loudspeaker unit (4, 4') between the first and second casing member (1, 1', 2, 2').

8. Process according to claim 7, further comprising realising electrical connections between the loudspeaker unit (4, 4') and electronic circuitry (14) carried by the second casing member (2, 2') after moving the loudspeaker unit (4, 4') towards the second casing member (2, 2') and before moving the first casing member (1, 1') towards the second casing member (2, 2').

## Patentansprüche

1. Gehäuse für eine elektronische Vorrichtung, wobei das Gehäuse ein erstes Gehäuseelement (1, 1', 1"), ein zweites Gehäuseelement (2, 2', 2"), eine Lautsprechereinheit (4, 4', 4"), die mindestens einen Lautsprecher umfasst und die dafür ausgelegt ist, an dem zweiten Gehäuseelement (2, 2', 2") montiert zu werden, umfasst, wobei die zwei Gehäuseelemente (1, 1', 1", 2, 2', 2") dafür ausgelegt sind, durch Bewegen des ersten Gehäuseelements (1, 1', 1") in Richtung des zweiten Gehäuseelements (2, 2', 2") entlang einer gegebenen Trajektorie (A) in eine Befestigungsposition und dadurch, dass es an dem zweiten Gehäuseelement (2, 2', 2") befestigt wird, wobei die Lautsprechereinheit (4, 4' 4") zwischen dem ersten und dem zweiten Gehäuseelement (1, 1', 1", 2, 2', 2") gehalten ist, zusammengesetzt zu werden, **dadurch gekennzeichnet, dass**
- die Lautsprechereinheit (4, 4') und das erste Gehäuseelement (1, 1') ein einzelnes Paar eines passenden ersten Außen- und Innenverbindungselements (15, 15', 17, 17') aufweisen, die in der Weise entlang der Trajektorie (A) verlaufen, dass sie in Eingriff gelangen, wenn das erste Gehäuseelement (1, 1') in die Befestigungsposition gebracht wird,
- die Lautsprechereinheit (4, 4') und das zweite Gehäuseelement (2, 2') zwei Paare passender zweiter Außen- und Innenverbindungselemente (9, 9', 11, 11') zum Montieren der Lautsprechereinheit (4, 4') an dem zweiten Gehäuseelement (2, 2') aufweisen.

2. Gehäuse nach Anspruch 1, wobei zwischen dem ersten Außen- und Innenverbindungselement (15, 15'; 17, 17') ein Zwischenraum vorhanden ist, wenn sie in der Befestigungsposition sind, und wobei sich in dem Zwischenraum ein erstes Schwingungsabsorptionselement (12) befindet.

3. Gehäuse nach Anspruch 1 oder 2, mit einem ersten Innenverbindungselement (15'), das einen trichterartigen Aufnahmeabschnitt (18') aufweist.

4. Gehäuse nach Anspruch 1, wobei die zweiten Verbindungselemente (9, 9'; 11, 11') entlang der Trajektorie (A) verlaufen.

5. Gehäuse nach Anspruch 1 oder 4, wobei zwischen dem zweiten Außen- und Innenverbindungselement (9, 9'; 11, 11') ein Zwischenraum vorhanden ist, wenn sie in der Befestigungsposition sind, und wobei sich in dem Zwischenraum ein zweites Schwingungsabsorptionselement (12, 12') befindet.

6. Gehäuse nach einem der Ansprüche 1 bis 5, wobei die elektronische Vorrichtung eine CRT-Vorrichtung, insbesondere ein Fernsehgerät, ist, wobei das zweite Gehäuseelement (2, 2') ein vorderes Gehäuseelement, das einen Rahmen für einen CRT (3) bildet, ist, wobei das erste Gehäuseelement (1, 1') ein hinteres Gehäuseelement ist und wobei sich die Lautsprechereinheit (4, 4') an einer Querseite des Gehäuses befindet.

7. Verfahren zum Zusammensetzen einer Lautsprechereinheit (4, 4') und eines Gehäuses, das ein erstes Gehäuseelement (1, 1') und ein zweites Gehäuseelement (2, 2') umfasst, wobei das Verfahren die folgenden Schritte umfasst:
- Bewegen der Lautsprechereinheit (4, 4') in Richtung des zweiten Gehäuseelements (2, 2') und dadurch Ineingriffbringen zweier Paare zweiter Außen-Innen-Verbindungselemente (9, 9', 11, 11');
- Bewegen des ersten Gehäuseelements (1, 1') in Richtung der Lautsprechereinheit (4, 4') und dadurch Ineingriffbringen eines einzelnen Paars erster Außen-Innen-Verbindungselemente (15, 15', 17, 17') und dadurch Befestigen der Lautsprechereinheit (4, 4') zwischen dem ersten und dem zweiten Gehäuseelement (1, 1', 2, 2').

8. Verfahren nach Anspruch 7, das ferner das Herstellen elektrischer Verbindungen zwischen der Lautsprechereinheit (4, 4') und einer durch das zweite Gehäuseelement (2, 2') getragenen elektronischen Schaltungsanordnung (14) umfasst, nachdem die Lautsprechereinheit (4, 4') in Richtung des zweiten Gehäuseelements (2, 2') bewegt worden ist und bevor das erste Gehäuseelement (1, 1') in Richtung des zweiten Gehäuseelements (2, 2') bewegt wird.

## Revendications

1. Boîtier pour un dispositif électronique comprenant un premier membre de boîtier (1, 1', 1"), un deuxième membre de boîtier (2, 2', 2"), une unité de haut-parleur (4, 4', 4") comprenant au moins un haut-parleur et adaptée pour être montée sur le deuxième membre de boîtier (2, 2', 2"), les deux membres de boîtier (1, 1', 1", 2, 2', 2") étant conçus pour être assemblés en déplaçant le premier membre de boîtier (1, 1', 1") vers le deuxième de boîtier (2, 2', 2") le long d'une trajectoire donnée (A) jusqu'à une position de fixation et en le fixant au deuxième membre de boîtier (2, 2', 2"), l'unité de haut-parleur (4, 4', 4") étant maintenue entre les premier et deuxième membres de boîtier (1, 1', 1", 2, 2', 2"), **caractérisé en ce que**
- l'unité de haut-parleur (4, 4') et le premier membre de boîtier (1, 1') ont une seule paire de premiers membres de connexion mâle et femelle qui s'assemblent (15, 15', 17, 17') s'étendant le long de ladite trajectoire (A) afin de s'engager lorsque le premier membre de boîtier (1, 1') est placé dans ladite position de fixation,
- l'unité de haut-parleur (4, 4') et le deuxième membre de boîtier (2, 2') ont deux paires de deuxièmes membres de connexion mâle et femelle qui s'assemblent (9, 9', 11, 11') pour le montage de l'unité de haut-parleur (4, 4') sur ledit deuxième membre de boîtier (2, 2').

2. Boîtier selon la revendication 1, dans lequel il existe un espace entre lesdits premiers membres de connexion mâle et femelle (15, 15' ; 17, 17') dans ladite position de fixation, et dans lequel un premier membre absorbant les vibrations (12) est situé dans ledit espace.

3. Boîtier selon la revendication 1 ou 2, avec un premier membre de connexion femelle (15') ayant une section de réception en entonnoir (18').

4. Boîtier selon la revendication 1, dans lequel lesdits deuxièmes membres de connexion (9, 9' ; 11, 11') s'étendent le long de ladite trajectoire (A).

5. Boîtier selon la revendication 1 ou 4, dans lequel il existe un espace entre lesdits deuxièmes membres de connexion mâle et femelle (9, 9' ; 11, 11') dans ladite position de fixation, et dans lequel un deuxième membre absorbant les vibrations (12, 12') est situé dans ledit espace.

6. Boîtier selon l'une quelconque des revendications 1 à 5, dans lequel le dispositif électronique est un dispositif CRT, en particulier un téléviseur, dans lequel le deuxième membre de boîtier (2, 2') est un membre avant de boîtier formant un cadre pour un CRT (3), dans lequel le premier membre de boîtier (1, 1') est un membre arrière de boîtier, et dans lequel l'unité de haut-parleur (4, 4') est située au niveau d'un côté du boîtier.

7. Procédé d'assemblage d'une unité de haut-parleur (4, 4') et d'un boîtier comprenant un premier membre de boîtier (1, 1') et un deuxième membre de boîtier (2, 2'), comprenant les étapes suivantes :
- déplacement de l'unité de haut-parleur (4, 4') vers le deuxième membre de boîtier (2, 2'), engageant ainsi deux paires de deuxièmes membres de connexion mâle-femelle (9, 9', 11, 11') ;
- déplacement du premier membre de boîtier (1, 1') vers l'unité de haut-parleur (4, 4'), engageant ainsi une seule paire de premiers membres de connexion mâle-femelle (15, 15', 17, 17') et fixant ainsi l'unité de haut-parleur (4, 4') entre les premier et deuxième membres de boîtier (1,1', 2, 2').

8. Procédé selon la revendication 7, comprenant en outre la réalisation de branchements électriques entre l'unité de haut-parleur (4, 4') et l'ensemble de circuits électroniques (14) du deuxième membre de boîtier (2, 2') après le déplacement de l'unité de haut-parleur (4, 4') vers le deuxième membre de boîtier (2, 2') et avant le déplacement du premier membre de boîtier (1, 1') vers le deuxième membre de boîtier (2, 2').
